Europäisches Patentamt

European Patent Office

Office européen des brevets

(19)

(11) Veröffentlichungsnummer: **0 170 930**
**B1**

(12) **EUROPÄISCHE PATENTSCHRIFT**

(45) Veröffentlichungstag der Patentschrift:
**01.06.88**

(21) Anmeldenummer: **85108705.6**

(22) Anmeldetag: **12.07.85**

(51) Int. Cl.⁴: **C 08 F 246/00, C 08 F 216/00, C 09 D 3/74**

(54) Vernetzbare Polymerisatharze und ihre Verwendung als Bindemittelkomponente in Beschichtungsmitteln.

(30) Priorität: **25.07.84 DE 3427385**

(43) Veröffentlichungstag der Anmeldung:
**12.02.86 Patentblatt 86/7**

(45) Bekanntmachung des Hinweises auf die Patenterteilung:
**01.06.88 Patentblatt 88/22**

(84) Benannte Vertragsstaaten:
**BE DE FR GB IT NL**

(56) Entgegenhaltungen:
**EP - A - 0 044 393**
**US - A - 4 082 816**

(73) Patentinhaber: **BAYER AG, Konzernverwaltung RP Patentabteilung, D-5090 Leverkusen 1 Bayerwerk (DE)**

(72) Erfinder: **Höhlein, Peter, Dr., Windmuehlenweg 3e, D-4152 Kempen (DE)**
Erfinder: **Schmidt, Manfred, Dr., Zeisigstrasse 5, D-4047 Dormagen (DE)**
Erfinder: **Pedain, Josef, Dr., Haferkamp 6, D-5000 Koeln 80 (DE)**
Erfinder: **Riberi, Bernd, Dr., Jakob-Boehme-Strasse 2, D-5000 Köln 80 (DE)**
Erfinder: **Sonntag, Michael, Dr., Gartenstrasse 27a, D-5070 Odenthal (DE)**

## Beschreibung

Die Erfindung betrifft neue, vernetzbare, hydroxylgruppenhaltige Polymerisatharze, die durch Copolymerisation von olefinisch ungesättigten Monomeren unter Mitverwendung von ungesättigten C$_4$-Diolen bzw. bestimmten Derivaten derartiger Diole hergestellt werden, und die Verwendung der Polymerisatharze als Bindemittelkomponente in Beschichtungsmitteln.

Hydroxylgruppenhaltige Polymerisatharze auf Basis olefinisch ungesättigter Monomerer und ihre Verwendung als Bindemittel für Beschichtungsmittel sind in einer Vielzahl von Publikationen beschrieben (vgl. z.B. DE-A-2 460 329, DE-B-1 038 754, US-A-3 002 959, US-A-3 375 227, GB-A-1 515 868).

Diese bekannten, Hydroxylgruppen aufweisenden Polymerisatharze eignen sich insbesondere in Kombination mit organischen Polyisocyanaten zur Herstellung von Beschichtungen einer guten mechanischen Beschaffenheit.

Nachteilhaft sind jedoch die nicht voll befriedigenden Bewitterungseigenschaften und die oft unzureichende Resistenz gegenüber aggressiven Medien. So weisen beispielsweise Automobildecklackierungen auf Basis der genannten Hydroxylgruppen aufweisenden Polymerisate, insbesondere Metalleffekt-Mehrschichtlackierungen, deren abzudeckende letzte Schicht Metallpigmente enthält oftmals eine nur unzureichende UV-Licht-Belastbarkeit auf, was in sonnenreichen Gebieten zur Rissbildung führt. Soweit es sich um Klarlacke auf Basis der genannten Polymerisate handelt, neigen diese unter dem Einfluss der Bewitterung auch zur Vermattung, was die, derartige Klarlacke als Decklacke aufweisenden Metalleffektlackierungen unansehnlich werden lässt.

Es war die der Erfindung zugrundeliegende Aufgabe, neue Bindemittel zur Verfügung zu stellen, die einerseits die Vorteile der bekannten, Hydroxylgruppen aufweisenden Polymerisatharze in sich vereinigen, ohne jedoch andererseits mit deren Nachteilen behaftet zu sein, d.h. die sich insbesondere zur Herstellung von witterungs- und chemikalien-resistenten Beschichtungen eignen.

Diese Aufgabe konnte durch die Bereitstellung der nachstehend näher beschriebenen, erfindungsgemässen Polymerisatharze gelöst werden. Bei diesen erfindungsgemässen Polymerisatharzen handelt es sich um Copolymerisate der zur Herstellung derartiger Harze üblicherweise eingesetzten, olefinisch ungesättigten Monomeren mit ungesättigten aliphatischen Diolen mit 4 Kohlenstoffatomen, deren Ethergruppen aufweisenden Alkoxylierungsprodukten des Hydroxylzahlbereichs 50-900 oder deren Umsetzungsprodukten mit ε-Caprolacton. Die Verwendung von Caprolacton-modifizierten Monomeren, die auch in situ hergestellt werden können, bei der Herstellung von Hydroxylgruppen aufweisenden Copolymerisaten ist zwar bereits aus US-A-4 082 816 und EP-A-0 044 393 bekannt, jedoch beinhalten diese Vorveröffentlichungen keinerlei Hinweis auf die erfindungswesentliche Verwendung von ungesättigten Diolen mit 4 Kohlenstoffatomen bzw. deren Modifizierungsprodukten als Comonomere.

Gegenstand der Erfindung sind als Bindemittelkomponente für Lacke geeignete, vernetzbare, Hydroxylgruppen aufweisende, durch Copolymerisation olefinisch ungesättigter Monomerer erhaltene Polymerisatharze, die eine Hydroxylzahl von 20 bis 400, eine Säurezahl von 0 bis 100, ein mittleres, osmometrisch bestimmtes Molekulargewicht von 500 bis 30 000 und eine molekulare Uneinheitlichkeit U von 0,5 bis 40 aufweisen, dadurch gekennzeichnet, dass sie 0,2 bis 80 Gew.-%, vorzugsweise 10 bis 70 Gew.-%, bezogen auf das Gewicht der Copolymerisate, an eingebauten Monomeren, ausgewählt aus der Gruppe bestehend aus olefinisch oder acetylenisch ungesättigten aliphatischen Diolen mit 4 Kohlenstoffatomen, deren Ethergruppen aufweisenden Alkoxylierungsprodukten des Hydroxylzahlbereichs 50 bis 900, deren Umsetzungsprodukten mit ε-Caprolacton im Molverhältnis Diol : ε-Caprolacton = 1:0,2 bis 1:10 und beliebigen Gemischen derartiger Verbindungen, aufweisen.

Gegenstand der Erfindung ist auch die Verwendung der erfindungsgemässen Polymerisatharze als Bindemittelkomponente in Beschichtungsmitteln bei der Herstellung von Überzügen auf beliebigen Substraten.

Die erfindungsgemässen Polymerisatharze, d.h. Polyacrylatpolyole weisen eine Hydroxylzahl von 20 bis 400, vorzugsweise 35 bis 200, eine Säurezahl von 0 bis 100, vorzugsweise 5 bis 50, ein mittleres, osmometrisch bestimmtes Molekulargewicht von 500 bis 30 000, vorzugsweise 800 bis 8000 und eine molekulare Uneinheitlichkeit U von 0,5 bis 40, vorzugsweise 0,5 bis 20 auf. Die molekulare Uneinheitlichkeit U ist definiert durch die Gleichung

$$U = (M_w/M_n) - 1$$

wobei

$M_w$ für das Gewichtsmittel und
$M_n$ für das Zahlenmittel des Molekulargewichts stehen.

Es handelt sich bei den erfindungsgemässen Polymerisatharzen um Copolymerisate der zur Herstellung derartiger Harze üblicherweise eingesetzten, olefinisch ungesättigten Monomeren wie z.B. (Meth)acrylsäure, die einfachen, gegebenenfalls hydroxyl-substituierten Ester dieser Säuren wie z.B. Methyl(meth)acrylat, Ethyl(meth)acrylat, n- oder Isopropyl(meth)acrylat, die isomeren Butyl(meth)-acrylate, 2-Ethylhexyl(meth)acrylate, 2-Hydroxy-ethyl(meth)acrylat, 2-Hydroxypropyl(meth)acrylat, 4-Hydroxybutyl(meth)acrylat, Maleinsäure, Monoester der Maleinsäure mit aliphatischen Alkoholen mit bis zu 8 Kohlenstoffatomen, Itaconsäure und Fumarsäure, Styrol, Vinyltoluol, Vinylacetat oder beliebige Abmischungen derartiger olefinisch ungesättigter Monomerer.

Erfindungswesentlich ist nun, dass die Polymerisatharze neben diesen beispielhaft genannten, üblicherweise bei der Herstellung derartiger Polymerisatharze verwendeten Monomeren 0,2 bis 80 Gew.-%, vorzugsweise 10 bis 70 Gew.-%, bezogen auf das Gesamtgewicht der Polymerisatharze an eingebauten, olefinisch oder acetylenisch ungesättigten C$_4$-Diolen und/oder bestimmter Derivate derartiger Diole aufweisen. Zu diesen erfindungswesentlichen Comonomeren gehören 1,2-Dihydroxy-but-3-en, 1,4-Dihydroxy-but-2-en, 1,4-Dihydroxy-but-2-in, die Alkoxylierungsprodukte, d.h. die Ethoxylierungs- und/oder Propoxylierungsprodukte dieser Diole des OH-Zahlbereichs 50 bis 900 und die Umsetzungsprodukte der genannten Diole mit ε-Caprolacton im Molverhältnis Diol : Caprolacton = 1:0,2 bis 1:10, vorzugsweise 1:0,5 bis 1:2. Die Umsetzungsprodukte von 1,4-Dihydroxy-but-2-en mit ε-Caprolacton im Molverhältnis Diol : Caprolacton = 1:0,5 bis 1:2 stellen die bevorzugten erfindungswesentlichen Comonomeren dar.

Die Herstellung der erfindungsgemässe Polymerisatharze kann durch Copolymerisation der Monomeren nach üblichen Verfahren erfolgen, wobei der radikalischen Polymerisation in der Schmelze bzw. in Lösung der Vorzug gegeben wird. Die Polymerisation kann bei Temparaturen von 50 bis 200°C, vorzugsweise 80 bis 150°C, durchgeführt werden.

Die Monomeren werden im wesentlichen in den gleichen Verhältnissen, wie sie zur Polymerisation eingesetzt sind, in das Copolymerisatharz eingebaut, wobei die einpolymerisierten Einheiten im wesentlichen statistisch verteilt sind.

Geeignete Initiatoren zur Durchführung des erfindungsgemässen Verfahrens sind solche Verbindungen, die in einer Reaktion erster Ordnung thermisch in Radiakle zerfallen. Die Halbwertzeiten des Radikalzerfalls geeigneter Initiatoren sollten bei 80 bis 150°C zwischen 100 und 0,01 Minuten liegen. Solche Initiatoren sind z.B. symmetrische aliphatische Azoverbindungen, wie Azoisobuttersäurenitril, Azo-bis-2-methylvaleronitril, 1,1'-Azo-bis-1-cyclohexannitril und 2,2'-Azo-bis-isobuttersäurealkylester; symmetrische Diacylperoxide wie z.B. Acetyl-, Propionyl- oder Butyrylperoxid, Brom-, Nitro-, Methyl- oder Methoxyl-Gruppen substituierte Benzoylperoxide sowie Lauroylperoxid; symmetrische Peroxydicarbonate wie z.B. Diethyl-, Diisopropyl-, Dicyclohexyl- sowie Dibenzoylperoxidcarbonat; tert.-Butylperoctoat oder tert.-Butylphenylperacetat; sowie Peroxycarbamate wie tert.-Butyl-N-(phenylperoxy)-carbamat oder tert.-Butyl-N-(2,3- oder 4-chlor-phenyl-peroxy)-carbamat. Weiterhin geeignet sind z.B. tert.-Butylhydroperoxid, Di-tert.-butylperoxid, Cumolhydroperoxid oder Di-cumylperoxid.

Die Initiatoren werden im allgemeinen in Mengen von 0,2 bis 15 Gew.-%, bezogen auf Gesamtmonomere, eingesetzt.

Bei der Herstellung der erfindungsgemässen Polymerisatharze können die üblichen Regler in Mengen von 0,1 bis 10 Gew.-%, bezogen auf Gesamtmonomere, mitverwendet werden. Geeignet sind beispielsweise Mercaptoethanol, 1-Mercapto-3-hydroxy-propan, 1-Mercapto-4-hydroxy-butan, tert.-Dodecylmercaptan oder n-Dodecylmercaptan.

Wird in Lösung polymerisiert, so können inerte Lösungsmittel, wie z.B. Ethanol, Propanol, Isopropanol, N- oder Iso-butanol, Methylethylketon, Toluol, Xylol, Essigsäurebutylester oder Butylglykol verwendet werden. Die Herstellung der erfindungsgemässen Polymerisatharze kann auch nach dem bekannten Prinzip der Emulsionspolymerisation erfolgen. Prinzipiell ist es auch möglich, die Polymerisationsreaktion in Gegenwart sogenannter Reaktivverdünner durchzuführen. Hierbei handelt es sich vor allem um mehrwertige Alkohole des Molekulargewichtsbereichs 62 bis 6000, vorzugsweise 62 bis 400, die nach Beendigung der Polymerisationsreaktion im Gemisch mit den Polymerisatharzen vorliegen. Diese flüssigen Gemische können dann unmittelbar als Bindemittelkomponente, beispielsweise in Zweikomponenten-Polyurethanlacken Verwendung finden. Geeignete Reaktivverdünner sind beispielsweise niedermolekulare Polyole wie Ethylenglykol, Propylenglykol, Butylenglykol, 1,6-Dihydroxyhexan, Trimethylolpropan, Diethylenglykol, Triethylenglykol, Dipropylenglykol und/oder Tripropylenglykol oder höhermolekulare Polyole der aus der Polyurethanchemie an sich bekannten Art, d.h. Polyesterpolyole auf Basis der genannten einfachen Alkohole und der üblichen, mehrwertigen Carbonsäuren wie Adipinsäure, Phthalsäure, Tetrahydrophthalsäure oder Hexahydrophthalsäure oder schliesslich höhermolekulare Polyetherpolyole wie sie durch Alkoxylierung der genannten einfachen, Ethergruppen-freien Polyole unter Verwendung von Ethylenoxid und/oder Propylenoxid in an sich bekannter Weise zugänglich sind.

Grundsätzlich ist es auch möglich, die erfindungsgemässen Polymerisatharze im Anschluss an ihre Herstellung beispielsweise durch Umsetzung mit Epoxiden wie z.B. Glycid oder Glycidestern, mit Carbonsäureanhydriden wie Phthalsäureanhydrid, mit Carbonsäuren wie Benzoesäure, Ethylhexansäure, Fettsäuren oder Ölsäuren zu modifizieren, um hierdurch gewisse Eigenschaften der Polyole wie z.B. die Pigmentverträglichkeit oder der letztlich erhaltenen Überzüge wie z.B. deren Haftung und Alkalibeständigkeit zu verbessern. Eine derartige Modifizierung der erfindungsgemässen Polymerisatharze ist jedoch im allgemeinen nicht erforderlich und daher weniger bevorzugt.

Die erfindungsgemässen Polymerisatharze können im Anschluss an ihre Herstellung nach einer eventuell vorkommenden Modifizierung bei erhöhten Temparaturen wie z.B. 140 bis 200°C von flüchtigen Bestandteilen befreit werden. Dies kann z.B. entweder unter Normaldruck in Schlangenrohrverdampfern durch Einblasen eines Inertgases, wie Stickstoff oder im Vakuum in Ausdampfapparaturen, wie Fallfilmverdampfern, Dünnschichtverdampfern, Schneckenverdampfern, Entspannungsverdampfern oder Sprühverdampfern, erfolgen.

Die erfindungsgemässen Polymerisatharze stellen wertvolle Bindemittelkomponenten für Zweikomponenten-Lacke dar. Unter «Zweikomponenten-Lakken» sind in diesem Zusammenhang sowohl «Eintopf-Systeme» als auch «Zweitopf-Systeme» zu verstehen. Der Umstand, dass es sich bei den erfindungsgemässen Polymerisatharzen um Bindemittelkomponenten für Zweikomponenten-Lacke handelt, besagt lediglich, dass in den Lacken neben den erfindungsgemässen Polymerisatharzen (und gegebenenfalls weiteren Polyhydroxylverbindungen) eine Härterkomponente vorliegen muss. Falls es sich bei diesem Härter beispielsweise um ein Polyisocyanat mit freien Isocyanatgruppen handelt, können die gebrauchsfertigen Beschichtungsmittel erst kurz vor ihrer Verarbeitung durch Abmischen der Komponenten hergestellt werden. In einem solchen Falle würde es sich um ein «Zweitopf-System» handeln. Falls es sich jedoch bei dem Härter um eine Verbindung handelt, die mit den erfindungsgemässen Polymerisatharzen erst bei erhöhter Temparatur reagiert, beispielsweise um Polyisocyanate mit blockierten Isocyanatgruppen, kann der Härter auch bereits bei Raumtemperatur mit dem Polymerisatharz zu einem bei Raumtemperatur lagerfähigen «Eintopf-System» vereinigt werden.

Bei der erfindungsgemässen Verwendung der erfindungsgemässen Polymerisatharze können diese in Abmischung mit bis zu 90 Gew.-%, vorzugsweise bis zu 40 Gew.-%, bezogen auf Gesamtgemisch, an anderen Verbindungen mit aktiven Wasserstoffatomen zum Einsatz gelangen. Hierbei handelt es sich beispielsweise um die bereits oben beispielhaft genannten «Reaktivverdünner», d.h. um Polyhydroxylverbindungen, die bereits bei der Herstellung der Polymerisatharze mitverwendet wurden oder aber auch nachträglich mit den Polymerisatharzen abgemischt werden, wobei jedoch einschränkend darauf hingewiesen werden muss, dass die beispielhaft genannten niedermolekularen Polyole maximal in einer Menge von bis zu 35 OH-Äquivalent-% in den Gemischen vorliegen sollten. Neben den oben bereits beispielhaft genannten höhermolekularen Polyhydroxylverbindungen kommen als Abmischkomponente beispielsweise auch ölmodifizierte Alkydharze oder urethanmodifizierte Polyesterpolyole in Betracht. Geeignete, Hydroxylgruppen aufweisende Abmischkomponenten für die erfindungsgemässen Polymerisatharze, insbesondere solche auf Polyester-Basis sind beispielsweise in den einschlägigen Standardwerken wie

1. Temple C. Pattan, Alkyd Resin Technology, Interscience Publishers John Wiley & Sons, New York, London, 1962;

2. Dr. Johannes Scheiber, Chemie und Technologie der künstlichen Harze, Wissenschaftliche Verlagsgesellschaft mbH, Stuttgart, 1943;

3. Hans Wagner und Hans-Friedrich Sarx, Lackkunstharze, 4. Auflage, Karl Hanser Verlag, München, 1959;

4. Ullmanns Encyclopädie der technischen Chemie, Band 14, Seiten 80 bis 106 (1963) beschrieben.

Im Falle der bereits erwähnten Herstellung der erfindungsgemässen Polymerisatharze in Gegenwart von Polyesterpolyolen als Reaktionsmedium ist es bei Verwendung von schwachen Lösungsmitteln bei der Herstellung der Polymerisatharze als zusätzliches Reaktionsmedium wie z.B. Testbenzin und/oder aromatischen Kohlenwasserstofflösungsmitteln, die für das Polyesterpolyol ein Löser, für das Polyhydroxylpolyacrylat jedoch ein Nichtlöser darstellen, möglich, das Polyhydroxylpolyacrylat in Form einer Dispersion von Polymermikroteilchen zu erhalten, die im Polyesterpolyol bzw. seiner Lösung stabil dispergiert sind. Die Verwendung derartiger Dispersionen ist beim erfindungsgemässen Verfahren insbesondere dann möglich, wenn die Aushärtung der Lacke unter Hitzeeinwirkung erfolgt. In einem solchen Fall schmelzen die dispergierten Polyhydroxylpolyacrylat-Teilchen vor ihrer Vernetzung unter gleichzeitiger homogener Verteilung im Lackfilm, so dass auch in diesem Fall klare Lackschichten erhalten werden.

Wie bereits ausgeführt, handelt es sich bei den erfindungsgemässen Polymerisatharzen um Bindemittelkomponenten, die mittels eines Vernetzungsmittels vernetzt werden müssen. Zu den ganz besonders bevorzugten Vernetzungsmitteln gehören die an sich bekannten Lackpolyisocyanate mit aliphatisch und/oder cycloaliphatisch gebundenen Isocyanatgruppen, insbesondere jene auf Basis von 1,6-Diisocyanatohexan und/oder auf Basis von 1-Isocyanato-3,3,5-trimethyl-5-isocyanatomethyl-cyclohexan (Isophorondiisocyanat). Besonders bevorzugte Vernetzungsmittel sind (i) Isocyanuratgruppen aufweisende Polyisocyanate auf Basis der genannten Diisocyanate oder deren Gemische, (ii) Biuretgruppen aufweisende Polyisocyanate auf Basis von 1,6-Diisocyanatohexan, (iii) Gemische der unter (i) und (ii) genannten Polyisocyanate, sowie (iv) blockierte Polyisocyanate der unter (i)-(iii) genannten Art. Die Herstellung der Biuretgruppen aufweisenden Lackpolyisocyanate kann beispielsweise nach den Verfahren der US-Patentschriften 3 124 605, 3 358 010, 3 903 126, 3 903 127 oder 3 976 622 erfolgen. Die Herstellung von Isocyanuratgruppen aufweisenden geeigneten Polyisocyanaten kann beispielsweise gemäss US-PS 3 919 218 oder gemäss DE-AS 1 954 093 erfolgen. Geeignete Blockierungsmittel sind z.B. Phenol, ε-Caprolacton, Malonsäurediethylester oder Acetylessigsäureethylester.

Selbstverständlich können im Prinzip bei der erfindungsgemässen Verwendung auch andere, aus der Polyurethanchemie an sich bekannte Polyisocyanate wie z.B. 2,4-Diisocyanatotoluol, 4,4'-Diisocyanato-diphenylmethan oder 4,4'-Diisocyanato-dicyclohexylmethan eingesetzt werden. Die Verwendung derartiger Polyisocyanate ist jedoch gegenüber der Verwendung der obengenannten Lackpolyisocyanate weniger bevorzugt.

Bei der erfindungsgemässen Verwendung können im Prinzip auch andere Vernetzungsmittel zum Einsatz gelangen. Derartige Vernetzungsmittel sind beispielsweise mit Hydroxylgruppen im Sinne einer Kondensationsreaktion befähigte Aminoplastharze, wie z.B. entsprechende Melamin-Derivate wie Hexamethoxymethylmelamin oder andere Melamin-Formaldehyd-Kondensationsprodukte, wie sie beispielsweise in FR-A-943 411 oder von D.H. Salomon in «The Chemistry of Organic Filmformers», Seiten 235 bis 240, John Wiley & sons, Inc., New York, 1974 beschrieben sind.

Weitere, im Prinzip anwendbare Vernetzungsmittel, die jedoch gegenüber den Polyisocyanaten und den Melaminharzen, insbesondere gegenüber den besonders bevorzugten Lackpolyisocyanaten mit freien Isocyanatgruppen weniger bevorzugt sind, sind die aus der Lacktechnologie bekannten, mit alkoholischen Hydroxylgruppen im Sinne einer Additions- oder Kondensationsreaktion befähigten Epoxidgruppen aufweisenden Verbindungen, Phenoplastharze, Resolharze, Harnstoffharze oder Guanidinharze. Beliebige Gemische der beispielhaft genannten Vernetzer können ebenfalls eingesetzt werden.

Die Vernetzungsmittel kommen bei der erfin-

dungsgemässen Verwendung der erfindungsgemässen Polymerisatharze bzw. ihrer Abmischungen mit weiteren Verbindungen mit alkoholischen Hydroxylgruppen im allgemeinen in solchen Mengen zum Einsatz, dass für jede alkoholische Hydroxylgruppe 0,8 bis 2,5, vorzugsweise 0,9 bis 1,5 Reaktivgruppen des Vernetzungsmittels zur Verfügung stehen.

Bei der erfindungsgemässen Verwendung können selbstverständlich die üblichen, aus der Lacktechnologie bekannten Hilfs- und Zusatzmittel mitverwendet werden.

Zu den Hilfsmitteln gehören Lösungsmittel wie z.B. Methanol, Ethanol, Isopropanol, Essigsäureethylester, Essigsäurebutylester, Ethylgkylolacetat, Ethylenglykolmonoethylether, Methylethylketon, Methylisobutylketon, Cyclohexanon, Toluol, Xylol, Testbenzin oder Gemische derartiger Lösungsmittel. Im Falle des Vorliegens von freien Isocyanatgruppen wird man vorzugsweise auf die Verwendung von Lösungsmitteln mit gegenüber Isocyanatgruppen reaktionsfähigen Gruppen verzichten, es sei denn, diese werden nicht als inertes Lösungsmittel sondern als «Reaktivverdünner» mitverwendet.

Weitere Hilfs- und Zusatzmittel sind Pigmente, viskositätsregulierende Stoffe, Antischaummittel, Katalysatoren für die NCO/OH-Additionsreaktion, UV-Absorber, oder Antioxidantien.

Gemäss einer besonderen Ausführungsform der erfindungsgemässen Verwendung können die erfindungsgemässen Polymerisatharze in wasserlöslicher oder -dispergierbarer Form in wässrigen oder wässrig-organischen Beschichtungsmitteln zum Einsatz gelangen. Hierzu werden die in den Polymerisatharzen vorliegenden Carboxylgruppen durch teilweise oder vollständige Neutralisation in Carboxylatgruppen überführt. Selbstverständlich ist es hierzu erforderlich, dass die Polymerisatharze einen Mindestgehalt an Carboxylgruppen, d.h. ca. 1,5 bis 15 Gew.-% Carboxylgruppen aufweisen. Die Polymerisatharze sind bei einem Gehalt von Carboxylatgruppen von ca. 1,5 bis 15 Gew.-% in Wasser löslich oder dispergierbar. Geeignete Neutralisationsmittel sind beispielsweise Ammoniak, Methylamin, Ethylamin, Diethylamin, Triethylamin, Mono-, Di- oder Triethanolamin, N-Methyl-diethanolamin, Dimethylethanolamin oder ähnliche basische Verbindungen.

Die Neutralisation kann in An- oder Abwesenheit der bereits oben beispielhaft genannten Lösungsmittel, vorzugsweise in Anwesenheit von wasserverträglichen Lösungsmitteln der oben beispielhaft genannten Art und gegebenenfalls in Gegenwart von Vernetzungsmitteln, welche bei Raumtemperatur nicht mit aktiven Wasserstoffatomen reagieren und/oder in Gegenwart der oben beispielhaft genannten Hilfs- und Zusatzmittel erfolgen. Vorzugsweise wird man bei der Verwendung der Carboxylatgruppen aufweisenden Polymerisatharze in wässrigen oder organisch-wässrigen Beschichtungsmitteln Vernetzer einsetzen, die ebenfalls in Wasser löslich bzw. dispergierbar sind. In gewissen Fällen ist es jedoch auch ausreichend, dass allein die Polymerisatharze eine ausreichende Wasserlöslichkeit bzw. -dispergierbarkeit aufweisen, da sie dann die Funktion eines Emulgators für den gegebenenfalls nicht in Wasser löslichen oder dispergierbaren Vernetzer übernehmen können.

Grundsätzlich ist es auch möglich, jedoch keineswegs bevorzugt, die erfindungsgemässen Polymerisatharze kationisch zu modifizieren, beispielsweise durch Einbau von tert. Aminstickstoffatomen, die im Anschluss an die Herstellung der Polymerisatharze in Ammoniumgruppen überführt werden, so dass kataphoretisch abscheidbare Bindemittel hergestellt werden können.

Die unter Verwendung der erfindungsgemässen Polymerisatharze zum Einsatz gelangenden Beschichtungsmittel können je nach Art des eingesetzten Vernetzers innerhalb des Temperaturbereichs von 0 bis 250 °C ausgehärtet werden. Die unter Verwendung der erfindungsgemässen Polymerisatharze zum Einsatz gelangenden Beschichtungsmittel, die als Vernetzer Isocyanatgruppen aufweisende Verbindungen aufweisen, können bereits bei Raumtemperatur ausgehärtet werden. Vorzugsweise erfolgt die Aushärtung derartiger Systeme zwischen 0 und 150 °C, vorzugsweise zwischen Raumtemperatur und 130 °C. Die unter Verwendung der erfindungsgemässen Polymerisatharze zum Einsatz gelangenden Einbrennlacke, die als Vernetzer beispielsweise Polyisocyanate mit blockierten Isocyanatgruppen oder beispielsweise Melaminharze enthalten, werden im allgemeinen innerhalb des Temperaturbereichs von 60 bis 250 °C ausgehärtet. Hierbei ist es manchmal vorteilhaft, die Härtung zunächst bei Temperaturen unter 120 °C zu beginnen und bei Temperaturen über 120 °C zu vervollständigen.

Die unter erfindungsgemässer Verwendung der erfindungsgemässen Polymerisatharze als Bindemittelkomponente hergestellten Überzugsmittel ergeben nach ihrer Härtung Überzüge mit ausgezeichneten anwendungstechnischen Daten und von hoher Chemikalien- und Witterungsbeständigkeit. Insbesondere können Haushaltgeräte mit metallischen Oberflächen, wie Spülmaschinen, Waschmaschinen und Kühlschränke, mit den erfindungsgemässe Polymerisatharze als Bindemittelkomponente enthaltenden, wässrigen Einbrennlacken lackiert werden, da die Überzüge eine besonders hohe Wachlaugenbeständigkeit und Lösungsmittelbeständigkeit, Hochglanz und ausgezeichnete Oberflächenhärte aufweisen.

Andererseits sind diese Bindemittel wegen ihres Hochglanzes und dem ausgezeichneten Bewitterungsverhalten für die Beschichtung von Gegenständen, die dem Wetter ausgesetzt sind, hervorragend geeignet. Hierzu zählen neben Fassadenelementen auch alle Arten von Transportmitteln, insbesondere Automobile, Bahnwaggons, Flugzeuge, Container und Schiffe.

Die Applikation der Lacke erfolgt nach den üblichen Methoden der Lacktechnologie, beispielsweise durch Spritzen, Giessen, Tauchen oder Walzen. Die Lacke werden im allgemeinen in solchen Mengen aufgetragen, dass Trockenfilmstärken der Klarlacke zwischen 0,005 und 0,05 mm resultieren.

Bei der Herstellung von Zweischicht-Metalleffekt-Lackierungen unter Verwendung der erfindungsgemässen Polymerisatharze als Bindemittelkomponente werden die Lacke bevorzugt als Klarlacke zur Herstellung einer Schlussschicht der Mehrschichtlackierung eingesetzt, deren letzte durch den Klarlack abzudecken Schicht Metallpigmente enthält. Um beispielsweise auf einem Kraftfahrzeug eine Metalleffektlackierung herzustellen, wird eine Karosse in der Regel zunächst mit einem Elektrotauchgrund anodisch oder kathodisch beschichtet. Nach dem Einbrennen und gegebenenfalls Schleifen dieser Schicht wird ein Füller aufgebracht, der nach dem Einbrennen das Substrat bzw. den Untergrund für die aufzubringende Metalleffektlackierung darstellt. Auf die Fülleroberfläche wird dann ein das Metallpigment enthaltender Grundlack aufgebracht, dessen Bindemittel ebenfalls die erfindungsgemässen Polymerisatharze als Polyhydroxylkomponente enthalten kann. Im Falle der Verwendung von erfindungsgemässen Polymerisatharzen als Bindemittelkomponente in dem auf diesen Grundlack aufgebrachten Klarlack entsteht eine Mehrschichtlackierung mit einer aussergewöhnlich harten, kratzfesten und hochelastischen Oberfläche, die eine ausgezeichnete Witterungs- und Chemikalienresistenz aufweist.

Die nachfolgenden Beispiele dienen der weiteren Erläuterung der Erfindung. Alle Prozentangaben beziehen sich auf Gewichtsprozente, alle Angaben in «Teilen» beziehen sich auf Gewichtsteile.

### Beispiel 1

In einem mit Rückflusskühler, Heiz-, Kühl- und Dosiervorrichtungen versehenen Glasgefäss werden 2880 Teile Xylol und 3720 Teile Butylacetat vorgelegt und auf 140°C erwärmt. Im Verlauf von 4 Stunden wird unter Stickstoffatmosphäre bei 140°C eine Mischung aus 3143 Teilen eines Umsetzungsproduktes von 1 Mol 1,4-Dihydroxy-but-2-en mit 2 Mol ε-Caprolacton (Viskosität 130 mPa.s bei 25°C, OH-Zahl = 332 mg KOH/g Substanz, Säurezahl <0,8 mg KOH/g Substanz), 1002 Teilen 2-Ethylhexylacrylat, 75 Teilen Acrylsäure und 3235 Teilen Methylmethacrylat zudosiert.

Gleichzeitig erfolgt unter getrennter Dosierung innerhalb von 5 Stunden die Zugabe von 105 Teilen Di--tert.-butylperoxid in 840 Teilen Xylol.

Anschliessend wird noch 3 Stunden bei 140°C gehalten und nach dem Abkühlen durch ein Filter abgedrückt.

Es resultiert eine Lösung eines erfindungsgemässen Polymerisatharzes mit einem Feststoffgehalt von 49,6% und einer Viskosität von 1331 mPa.s bei 20°C. Der Feststoff weist eine Säurezahl von 10 mg KOH/g und eine Hydroxylzahl von 152 mg KOH/g auf.

### Beispiel 2

Beispiel 1 wird wiederholt mit dem Unterschied, dass die Monomerenzusammensetzung ein Gemisch aus 1026 Teilen eines Umsetzungsproduktes von 1 Mol 1,4-Dihydrixy-but-2-en mit 1 Mol ε-Caprolacton (Viskosität 80 mPa.s bei 25°C, OH-Zahl = 544 mg KOH/g Substanz, Säurezahl <0,6 mg KOH/g Substanz), 2051 Teilen 2-Ethylhexylacrylat, 75 Teilen Acrylsäure und 4237 Teilen Methylmethacrylat darstellt.

Es resultiert eine Lösung eines erfindungsgemässen Polymerisatharzes mit einem Feststoffgehalt von 50,2% und einer Viskosität von 1459 mPa.s bei 20°C. Der Feststoff weist eine Säurezahl von 12 und eine Hydroxylzahl von 148 auf.

### Vergleichsbeispiel

Beispiel 2 wird wiederholt, mit dem Unterschied, dass der 1,4-Dihydroxy-but-2-en/ε-Caprolacton-Anteil durch 2-Hydroxypropylacrylat äquimolar ersetzt wird.

Es resultiert eine Lösung eines Copolymerisats mit einem Feststoffgehalt von 49,8% und einer Viskosität von 1280 mPa.s bei 20°C. Der Feststoff weist eine Säurezahl von 10,7 und eine Hydroxylzahl von 142 auf.

### Beispiel 3

Beispiel 1 wird wiederholt mit dem Unterschied, dass die Monomerenzusammensetzung ein Gemisch aus 2915 Teilen Butylacrylat, 4715 Teilen Methylmethacrylat, 55 Teilen Acrylsäure und 1040 Teilen ethoxyliertes 1,4-Dihydroxy-but-2-en mit durchschnittlich 2 Mol Ethylenoxid pro Mol Diol ist. Als Initiatorlösung wird ein Gemisch aus 295 Teilen Di--tert.-butylperoxid in 830 Teilen Xylol eingesetzt.

Es resultiert eine Lösung eines erfindungsgemässen Polymerisatharzes mit einem Feststoffgehalt von 50,0% und einer Viskosität von 1381 mPa.s bei 20°C. Der Feststoff weist eine Säurezahl von 7 und eine Hydroxylzahl von 70 auf.

### Beispiel 4

Beispiel 3 wird wiederholt mit dem Unterschied, dass die Monomerenzusammensetzung ein Gemisch aus 4835 Teilen Styrol, 3120 Teilen Butylacrylat, 205 Teilen Methylmethacrylat, 55 Teilen Acrylsäure und 520 Teilen 1,4-Dihydroxy-but-2-en darstellt.

Es resultiert eine Lösung eines erfindungsgemässen Polymerisatharzes mit einem Feststoffgehalt von 50,4% und einer Viskosität von 1087 mPa.s. Der Feststoff weist eine Säurezahl von 5 und eine Hydroxylzahl von 81 auf.

### Verwendung der Polymerisatharze als Bindemittelkomponente

Von den 50%igen Harzlösungen werden jeweils 100 Teile eingewogen und jeweils unter Zusatz von 4,5 Teilen eines handelsüblichen Verlaufsmittels (® Baysilon OL, Bayer AG, Leverkusen, 1%ige Lösung in Ethylacetat), 32,7 Teilen eines Isocyanuratgruppen haltigen Polyisocyanaten auf Basis von Hexamethylendiisocyanat mit einem NCO-Gehalt von ca. 19,4 Gew.-% (50%ige Lösung in Xylol), 1,8 Gew.-Teilen Zinkoctoat (10% Zn-Metallgehalt), 0,9 Gew.-Teilen eines handelsüblichen Wärmestabilisators (®Iriganox 1010, Ciba-Geigy, Basel) zu einem Klarlack verarbeitet, der unter Zugabe von 38,9 Teilen eines Lösergemisches aus Ethylenglykol-momoethyletheracetat, Butylacetat und Xylol im Gewichtsverhältnis 2:1:1 verdünnt wird.

Die so hergestellten Klarlacke werden unmittelbar nach ihrer Herstellung zur Herstellung von Decklackschichten auf Metallic-Lackierung verwendet. Hierzu wird wie folgt verfahren:

10 Prüfbleche werden mit einer Eisenphosphatierung passiviert, mit einer üblichen Elektrotauchlackierung grundiert, die eingebrannt wird, dann wird mit einem üblichen Einbrennfüller beschichtet, der ebenfalls eingebrannt wird.

5 der so vorbehandelten Bleche werden mit einem Grundlack auf Basis von Acrylat/Celluloseacetobutyrat/Melamin-Harz, die 5 verbleibenden Bleche mit einem Grundlack auf Basis von Acrylatharz/Isocyanat-Harzen beschichtet. Beide Grundlacktypen enthalten ein Aluminiumpigment. Anschliessend werden die Bleche nass in nass mit den Klarlacken, welche mit einem Lösungsmittelgemisch aus Xylol/Butylacetat/Ethylglykolacetat im Verhältnis 1:1:2 auf eine verarbeitungsfähige Konsistenz eingestellt (ca. 20 bis 23 s im Auslaufbecher mit 4-mm-Düse) sind, durch Spritzauftrag beschichtet. Nach einer Ablüftzeit von 15 min wird 30 min bei 80°C in einem Umluftofen gehärtet. Die Versuche werden so durchgeführt, dass die Klarlackschichten jeweils Trockenschichtdicken von 35 bis 40 µm und die gesamte Mehrschichtlackierung eine Trockenschichtdicke von ca. 120 µm aufweist.

Die so beschichteten Tafeln werden in einem klimatisierten Raum bei 23°C und einer Luftfeuchtigkeit von 50% 24 Stunden gelagert und dann den folgenden Prüfungen unterzogen:

®Weather-O-meter mit Kohlenbogenlampe-Dauerlichteinwirkung, Wechselwirkung: 17 min trocken, dann 3 min Beregnung,

Schwarztafeltemparatur: max. 65°C.

Beurteilt werden die Platten zum Zeitpunkt der beginnenden Rissbildung.

Die Prüfergebnisse sind in der folgenden Tabelle zusammengestellt.

### TABELLE

| | | Klarlack nach Beispiel | | | |
|---|---|---|---|---|---|
| auf Polyacrylat/Cellulose-acetobutyrat-Melamin-Grundlack | 1 | 2 | 3 | 4 | Vergleich |
| ®Weather-O-meter (Kohlenbogenlampe) | | | | | |
| gerissen nach Stunden* | ca. 3000 | ca. 2500 | ca. 3000 | ca. 3000 | ca. 1200 |
| Glanz 60°C nach 1000 Stunden° | 90 | 85 | 90 | 87 | 70 |
| auf Polyester/Cellulose-acetobutyrat-Melamin-Grundlack | | | | | |
| ®Weather-O-meter (Kohlenbogenlampe) | | | | | |
| gerissen nach Stunden* | ca. 3000 | ca. 2500 | ca. 3000 | ca. 3000 | ca. 1200 |
| Glanz 60° nach 100 Stunden° | 90 | 85 | 90 | 87 | 68 |

\* Beurteilung nach DIN 53 230
° Glanz nach DIN 67 530

### Beispiel 5

### Herstellung einer Polymerisatharz-Lösung

In einem mit Rückflusskühler, Heiz-, Kühl- und Dosiervorrichtung versehenen Glasgefäss werden 1029 g Ethylglykol vorgelegt und auf 110°C erhitzt. Im Verlauf von 3 Stunden wird dann bei 100°C eine Mischung aus 120 g des Additionsproduktes aus 1,4-Dihydroxy-but-2-en und ε-Caprolacton (Molverhältnis 1:2), 353 g n-Butylacrylat, 865 g Styrol, 104 g Acrylsläure, 282 g N-Methoxymethylacrylsäureamid und 10 g Mercaptoethanol zudosiert. Gleichzeitig wird innerhalb eines Zeitraumes von 4 Stunden eine Mischung aus 66 g tert.-Butylperoctoat und 171 g Ethylglykol zugetropft. Anschliessend wird 2 Stunden bei 110°C nachgerührt.

Nach Abfiltrieren der festen Bestandteile resultiert eine Lösung eines erfindungsgemässen Polymerisatharzes mit einem Feststoffgehalt von 59,3% und einer Viskosität von 12 500 mPa.s bei 20°C. Der Feststoff weist eine Säurezahl von 27 und eine Hydroxylzahl von 25 auf.

### Herstellung eines Weisslackes und eines daraus hergestellten Lackfilms

100 Teile der vorstehend beschriebenen Lösung des Polymerisatharzes werden mit 4,34 Teilen Dimethylethanolamin neutralisiert und aus 7,84 Teilen der neutralisierten Lösung werden unter Zusatz von 27,12 Teilen Titandioxid vom Rutiltyp und 15,46 Teilen Wasser Mahlgutformulierungen für die Perlmühlenanreibung hergestellt. Hieraus wird dann folgender Weisslack zubereitet:

| | in Teilen |
|---|---|
| Mahlgutformulierung | 50,42 |
| neutralisierte Polymerisatharz-Lösung | 34,52 |
| Hexamethoxymethylmelamin | 4,54 |
| p-Toluolsulfonsäure, 10%ig in Isopropylalkohol | 0,54 |
| Verlaufsmittel gemäss Beispiel 4 | 0,30 |
| Wasser | 9,68 |
| | 100,00 |

Einstellen auf Spritzviskosität
(51 s im 4-mm-Becher, DIN 43 211)
mit Butylglykol/Wasser 1:1　　　　28,5 Teile

Der erhaltene Weisslack wurde auf zinkphosphatierte Stahlbleche durch Spritzen appliziert (Trockenfilmschichtdicke ca. 25 bis 30 μm) und 10 min bei 180°C im Umlufttrockenschrank eingebrannt.

*Test der Waschlaugenbeständigkeit*

Die lackierten Prüfbleche (Dicke der Filme 30 μm,, eingebrannt 10 min bei 180°C, anschliessend 3 Wochen bei Raumtemperatur gelagert) wurden über einen Zeitraum von 4 Stunden bei 95°C in eine 0,2%ige wässrige Lösung eines handelsüblichen Waschmittels auf Basis von Pentanatriumtripolyphosphat, Natriummetasilikat, Soda, oxethyliertem Nonylphenol (10 Ethylenoxideinheiten/Mol Phenol) und Cyanursäurechlorid gegeben.

Nach dem Abspülen mit kaltem Wasser werden diese Bleche nochmals bei 95°C über 4 Stunden einer 3%igen Lösung des oben angegebenen Waschmittels bei 95°C ausgesetzt.

Die lackierten Prüfbleche überstanden diesen Waschlaugentest ohne jegliche Blasenbildung. Die Lackfilme wiesen nach dem Waschlaugentest folgende Eigenschaften auf:

| | |
|---|---|
| Glanz nach Gardner im 20°-Winkel (ASTM 523) | 81 |
| Pendelhärte nach König (sec) DIN 53 157 | 152 |
| Haftfestigkeit (Gitterschnitt) DIN 53 151 | 1/2 |
| Erichsentiefe (mm) DIN 53 156 | 3 |
| Vergilbung (ELREPHO) | 78,2 |

**Patentansprüche**

1. Als Bindemittelkomponente für Lacke geeignete, vernetzbare, Hydroxylgruppen aufweisende, durch Copolymerisation olefinisch ungesättigter Monomerer erhaltene Polymerisatharze, die eine Hydroxylzahl von 20 bis 400, eine Säurezahl von 0 bis 100, ein mittleres, osmometrisch bestimmtes Molekulargewicht von 500 bis 30 000 und eine molekulare Uneinheitlichkeit U von 0,5 bis 40 aufweisen, dadurch gekennzeichnet, dass sie 0,2 bis 80 Gew.-%, bezogen auf das Gewicht der Copolymerisate, an eingebauten Monomeren, ausgewählt aus der Gruppe bestehend aus olefinisch oder acetylenisch ungesättigten aliphatischen Diolen mit 4 Kohlenstoffatomen, deren Ethergruppen aufweisenden Alkoxylierungsprodukten des Hydroxylzahlbereichs 50 bis 900, deren Umsetzungsprodukten mit ε-Caprolacton im Molverhältnis Diol : ε-Caprolacton = 1:0,2 bis 1:10 und beliebigen Gemischen derartiger Verbindungen, aufweisen.

2. Polymerisatharze gemäss Anspruch 1, dadurch gekennzeichnet, dass sie 10 bis 70 Gew.-%, bezogen auf das Gewicht der Polymerisatharze, an eingebauten Umsetzungsprodukten von 1,4-Dihydroxy-but-2-en mit ε-Caprolacton im Molverhältnis 1:0,5 bis 1:2 aufweisen.

3. Verwendung der hydroxylgruppenhaltigen Polymerisatharze gemäss Anspruch 1 und 2 als Bindemittelkomponente in Beschichtungsmitteln bei der Herstellung von Überzügen auf beliebigen Substraten.

4. Verwendung gemäss Anspruch 3, dadurch gekennzeichnet, dass die Beschichtungsmittel als Bindemittel

a) eine Polyhydroxylkomponente bestehend aus den Polymerisatharzen gemäss Ansprüchen 1 und/oder 2 oder deren Abmischungen mit bis zu 90 Gew.-%, bezogen auf die Gesamtmenge der Polyhydroxylverbindungen, an anderen, mindestens zwei alkoholische Hydroxylgruppen aufweisenden Verbindungen des Molekulargewichtsbereichs 62 bis 6000
im Gemisch mit

b) einem Vernetzer, ausgewählt aus der Gruppe bestehend aus organische Polyisocyanaten mit gegebenenfalls zumindest teilweise blockierten Isocyanatgruppen, Aminoplastharzen, Epoxygruppen aufweisenden Verbindungen, Phenoplastharzen, Resolharzen, Harnstoffharze, Guanidinharze und Gemischen derartiger Vernetzer
aufweisen.

5. Verwendung gemäss Anspruch 3 und 4, dadurch gekennzeichnet, dass die Beschichtungsmittel
a) Polymerisatharze der in Anspruch 2 genannten Art
im Gemisch mit
b) Lackpolyisocyanaten, ausgewählt aus der Gruppe bestehend aus (i) Isocyanatgruppen aufweisenden Polyisocyanaten auf Basis von 1,6-Diisocyanatohexan und/oder 1-Isocyanato-3,3,5-trimethyl-5-isocyanatomethyl-cyclohexan, (ii) Biuretgruppen aufweisenden Polyisocyanaten auf Basis des 1,6-Disiocyanatohexans, (iii) Gemischen der unter (i) und (ii) genannten Polyisocyanate und (iv) mit den üblichen Blockierungsmitteln für Isocyanatgruppen blockierte Polyisocyanate bzw. Polyisocyanatgemische der unter (i)-(iii) genannten Art
in einem OH/NCO-Äquivalentverhältnis, bezogen auf die Hydroxylgruppen der Komponente (a) und die freien und blockierten Isocyanatgruppen der Komponente (b) von 1:2,5 bis 1:0,8 aufweisen.

6. Verwendung gemäss Anspruch 3 bis 5, dadurch gekennzeichnet, dass die Polymerisatharze eine ihre Löslichkeit oder Dispergierbarkeit in Wasser gewährleistende Menge an eingebauten Carboxylatgruppen aufweisen und die Beschichtungsmittel wasserhaltige, die Bindemittelkomponenten in gelöster oder dispergierter Form enthaltende Systeme darstellen.

**Claims**

1. Crosslinkable polymer resins suitable for use as binder components for lacquers, obtained by the copolymerisation of olefinically unsaturated monomers and containing hydroxyl groups with a hydroxyl number of from 20 to 400 and having an acid number of from 0 to 100, an average molecular weight of from 500 to 30 000 determined osmometrically and a molecular non-uniformity U of from 0.5 to 40, characterized in that they contain from 0.2 to 80% by weight, based on the weight of copolymers, of incorporated monomers selected from the group consisting of olefinically or acetylenically unsaturated aliphatic diols containing four carbon atoms, their ehter group-containing alkoxylation products in the hydroxyl number range of from 50 to 900, their reaction products with ε-caprolactone in a molar ratio of diol to ε-caprolactone of from 1:0,2 to 1:10 and any mixtures of such compounds.

2. Polymer resins according to Claim 1, characterized in that they contain from 10 to 70% by weight, based on the weight of the polymer resins, of incorporated reaction products of 1,4-dihydroxy--but-2-ene and ε-caprolactone in a molar ratio of from 1:0.5 to 1:2.

3. Use of the hydroxyl group-containing polymer resins according to Claims 1 and 2 as binder components in coating compounds for the formation of coatings on any substrates.

4. Use according to Claim 3, characterized in that the coating compounds contained, as binders,

a) a polyhydroxyl component consisting of the polymer resins according to Claims 1 and/or 2 or mixtures thereof with up to 90% by weight, based on the total quantity of polyhydroxyl compounds, of other compounds in the molecular weight range of from 62 to 6000 containing at least two alcoholic hydroxyl groups, in admixture with

b) a crosslinking agent selected from the group consisting of organic polyisocyanates containing isocyanate groups which may be at least partially blocked, aminoplast resins, compounds containing epoxy groups, phenolast resins, resol resins, urea resins, guanidine resins and mixtures of such crosslinking agents.

5. Use according to Claims 3 and 4, characterized in that the coating compounds contain

a) polymer resins of the type mentioned in Claim 2 in admixture with

b) lacquer polyisocyanates selected from the group consisting of (i) polyisocyanates containing isocyanurate groups and based on 1,6-diisocyanatohexane and/or 1-isocyanato-3,3,5-trimethyl-5-isocyanatomethyl-cyclohexane, (ii) polyisocyanates containing biuret groups and based on 1,6-diisocyanatohexane, (iii) mixtures of the polyisocyanates mentioned under (i) and (ii) and (iv) polyisocyanates or polyisocyanate mixtures of the type mentioned under (i)-(iii) blocked with the usual blocking agents for isocyanate groups in an OH/NCO equivalent ratio of from 1:2.5 to 1:0,8, based on the hydroxyl groups of component (a) and the free and blocked isocyanate groups of component (b).

6. Use according to Claims 3 to 5, characterized in that the polymer resins contain a quantity of incorporated carboxylate groups ensuring their solubility or dispersibility in water and the coating compounds are water-containing systems containing the binder components in a dissolved or dispersed form.

## Revendications

1. Résines polymériques réticulables porteuses de groupes hydroxyle, obtenues par copolymérisation de monomères à non-saturation oléfinique, utilisables comme composant de liant pour peintures, qui présentent un indice d'hydroxyle de 20 à 400, un indice d'acide de 0 à 100, un poids moléculaire moyen déterminé par osmométrie de 500 à 30 000 et une hétérogénéité moléculaire U de 0,5 à 40, caractérisées en ce qu'elles présentent 0,2 à 80% en poids, par rapport au poids des copolymérisats, de monomères incorporés, choisis dans le groupe constitué de diols aliphatiques à non-saturation oléfinique ou acétylénique ayant 4 atomes de carbone, leurs produits d'alkoxylation porteurs de groupes éther dans l'intervalle d'indices d'hydroxyle de 50 à 900, leurs produits de réaction avec l'ε-caprolactone dans un rapport molaire diol : ε-caprotactone de 1:0,2 à 1:10 et des mélanges quelconques de ces composés.

2. Résines polymeriques suivant la revendication 1, caractérisées en ce qu'elles présentent 10 à 70% en poids, par rapport au poids des résines polymériques, de produits incorporés de réaction du 1,4-dihydroxy-but-2-ène avec l'ε-caprolactone dans le rapport de 1:0,5 à 1:2.

3. Utilisation des résines polymériques porteuses de groupes hydroxyle suivant les revendications 1 et 2 comme composant de liant dans des compositions de revêtement, pour la formation de revêtements sur des substrats quelconques.

4. Utilisation suivant la revendication 3, caractérisée en ce que les compositions de revêtement présentent comme liant

a) un composant polyhydroxylique constitué des résines polymériques suivant les revendications 1 et/ou 2 ou de leurs mélanges avec jusqu'à 90% en poids, par rapport à la quantité totale de composés polyhydroxyliques, d'autres composés porteurs d'au moins deux groupes hydroxyle alcooliques, de poids moléculaire compris dans l'intervalle de 62 à 6000
en mélange avec

b) un agent de réticulation, choisi dans le groupe comprenant des polyisocyanates organiques portant le cas échéant des groupes isocyanato au moins partiellement protégés, des résines du type aminoplaste, des composés porteurs de groupes époxy, des résines du type phénoplaste, des résines du type résol, des résines d'urée, des résines de guanidine et des mélanges de tels agents de réticulation.

5. Utilisation suivant les revendications 3 et 4, caractérisée en ce que la composition de revêtement contient

a) des résines polymériques du type défini dans la revendication 2
en mélange avec

b) des polyisocyanates pour peintures, choisis dans le groupe comprenant (i) des polyisocyanates porteurs de groupes isocyanurate à base de 1,6-diisocyanatohexane et/ou de 1-isocyanato-3,3,5-tri-méthyl-5-isocyanatométhylcyclohexane, (ii) des polyisocyanates porteurs de groupes biuret à base de 1,6-diisocyanatohexane, (iii) des mélanges des polyisocyanates mentionnés en (i) et (ii), et (iv) des polyisocyanates protégés avec les agents de protection classiques pour des groupes isocyanato ou des mélanges des polyisocyanates des types indiqués en (i) à (iii)

dans un rapport d'équivalents OH/NCO, relativement aux groupes hydroxyle du composant (a) et aux groupes isocyanato libres et protégés du composant (b), de 1:2,5 à 1:0,8.

6. Utilisation suivant les revendications 3 à 5, caractérisée en ce que les résines polymériques présentent une quantité de groupes carboxylate incorporés assurant leur solubilité ou leur dispersibilité dans l'eau et les compositions de revêtement constituent des systèmes aqueux contenant les composants de liant sous la forme dissoute ou dispersée.